# EUROPEAN PATENT APPLICATION

(11) **EP 4 398 052 A1**
(43) Date of publication of application: **10.07.2024**
(21) Application number: 23020002.4
(22) Date of filing: 05.01.2023
(51) Int. Cl.: G05B 13/04

(54) **METHOD FOR OPERATING A PROCESS PLANT, CONTROL SYSTEM AND PROCESS PLANT**

(71) Applicant: Linde GmbH, 82049 Pullach (DE); Rheinisch-Westfälische Technische Hochschule (RWTH) Aachen, 52062 Aachen (DE)
(72) Inventor: SCHULZE, Jan, 52064 Aachen (DE); MITSOS, Alexander, 52078 Aachen (DE); PESCHEL, Andreas, 82049 Pullach (DE); ECKER, Anna-Maria, 82049 Pullach (DE)
(74) Representative: Imhof, Dietmar

(57) **Abstract**

The invention relates to a method for operating a process plant, wherein the process plant is configured to perform at least one of substance modifications and substance conversions, with the aid of at least one of physical, chemical, biological, and nuclear effects, preferably, separation of air into nitrogen and/or oxygen and/or argon and/or other components included in air, said method comprising the following steps, performed by a control system comprising a model predictive controller having a control model: initialising the control model, based on a digital twin of the process plant, determining, based on the initialised control model, one or more setpoints for one or more parameters of one or more process components and/or units of the process plant; and providing the one or more setpoints to control the process plant. The invention also relates to a method comprising adapting the control model based on a digital twin of the process plant.

## Description

The present invention relates to a method for operating a process plant, a control system and a process plant, such as a process plant comprising an air separation unit.

### Background of the Invention

Process plants (also called chemical plants or chemical engineering plants) are usually understood to be plants for carrying out substance modifications and/or substance conversions with the aid of purposeful physical and/or chemical and/or biological and/or nuclear effects. Such modifications and conversions typically comprise crushing, sieving, mixing, heat transferring, cohobating, crystallizing, drying, cooling, filling, mass transfer between different forming phases, and superimposed substance transformations, such as chemical, biological or nuclear reactions.

A process plant can comprise several different components such as different heat exchangers, e.g., plate-fin heat exchangers (PFHE) or coil-wound heat exchangers (CWHE), columns, e.g. distillation and/or adsorption and/or wash columns, machines like compressors, boosters, turbines, pumps, cold boxes, etc. For example, process plants can be plants for producing specific gases, i.e. the plants can be or comprise air separation units, natural gas plants, ethylene plants, hydrogen plants, adsorption plant, etc.

A way to control the operation of such a process plant is using a so-called model predictive control or a model predictive controller (MPC). Initialising the model used here and reduction of offsets between model and plant can be difficult, however. In view of this, the object of the present invention is to provide an improved way for operating a process plant.

### Disclosure of the invention

This object is achieved by providing a method for operating a process plant, a control system and a process plant according to the independent claims. Advantageous further embodiments form the subject matter of the dependent claims and of the subsequent description.

The present invention relates to operating a process plant. A process plant is configured to perform at least one of substance modifications and substance conversions, with the aid of at least one of physical, chemical, biological, and nuclear effects. Such modifications and conversions comprise, for example, at least one of crushing, sieving, mixing, heat transferring, cohobating, crystallizing, drying, cooling, filling, and superimposed substance transformations, such as chemical, biological or nuclear reactions. The process plant can comprise several different components such as different heat exchangers, e.g. plate-fin heat exchangers (PFHE) or coil-wound heat exchangers (CWHE), columns, e.g. distillation and/or adsorption and/or wash columns, machines like compressors, boosters, turbines, pumps, cold boxes, etc. For example, process plants can be plants for producing specific gases, i.e. the plants can be or comprise air separation units, natural gas plants, ethylene plants, hydrogen plants, adsorption plant, etc.

In the following, the invention will be described with a process plant that is or comprises one or more air separation units (ASUs). It is noted, however, that the invention is also applicable to process plants in the sense mentioned above but also to additional and/or other types than air separation units; the invention is applicable, e.g., to industrial chemical processes in general. For example, the process plant can be configured to perform one or more processes related to at least one of natural gas, synthesis gas, hydrogen, and petrochemicals, hydrogen, downstream processes of electrolysis (e.g., electrolysis of water with PEM, AEL, AEM, SOEC and combinations thereof, ammonia loop and methanol loop based on hydrogen from electrolysis). In an embodiment, the process plant comprises or is at least one of an air separation unit, a natural gas plant, an ethylene plant, a hydrogen plant and an adsorption plant.

Air separation units (ASUs), typically, are highly integrated systems with advanced requirements regarding the optimisation of product recovery and load change capability. These processes should be able to react fast to changes in customer demand while ensuring highest possible product yield at specified purity. Load change times can vary, for example, from 0.5% per minute to 10% per minute depending on the plant topology and/or component design and/or operating strategy. If air separation units include column systems for argon separation, for example, controlling the transfer stream from the double column to the argon system is challenging and limits load change speeds. Typical impurity limits for nitrogen products, for example, are 1 ppm oxygen (O2). Oxygen products typically include 99.5% to 99.9% oxygen. Argon products are typically contaminated by 1 ppm oxygen (02) and 1 ppm nitrogen (N2).

Volatile availability and price patterns of electric energy, for example, can require flexible (e.g., load-flexible and/ or production-rate-flexible) operation of air separation processes. From a control point of view, air separation units are strongly intercoupled multi-variable systems. Hence, optimisation of the setpoints of base-layer controllers depending on the current state of the plant is necessary and can be realised by model predictive control (MPC) as mentioned above. If model predictive control is applied, i.e., if operation of the process plant is based on model predictive control, processes or industrial processes such as air separation processes are usually controlled using linear model predictive controllers (LMPC).

Model predictive control is an advanced control strategy. A model predictive controller comprises a model, e.g., a dynamic model, of the controlled process. Applying the dynamic model of the process provides a prediction of the future process behaviour of the process plant or the controlled process. Optimal control action can be computed using mathematical algorithms.

The dynamic model can be based on, for example, physical equations and/or design information (then, the model is called a white box model). The dynamic model can also be based on, for example, mathematical models for input and/or output correlation of data information (then, the model is called a black box model), e.g., nonlinear autoregressive exogenous (NARX) models. The dynamic model can also be based on, for example, physically and/or mathematically motivated model structures that are (partly or fully) interpretable, combined with design information, and combined with empirical correlations from data information (then, the model is called grey box model).

White box models are based on physical principles and design information; such model is also called a first principles model. Hence, these models are valid and applicable within a wide range of operation of the process plant. On the downside, for complex processes, these models can limit the speed of optimisation when applied as control models in plant operation. Grey box models can be, in many cases, optimised faster than white box models but are more restricted in their range of validity.

Depending on the modelling strategy, the control model, that is the model used for the MPC, can be linear or nonlinear. A linear model results in a linear model predictive controller, LMPC, and a nonlinear model results in a nonlinear model predictive controller, NMPC.

LMPC is typically based on the identification of linear models from recorded plant data. The plant data is obtained, e.g., from step tests based on one or more points of operation. In this context, it can be assumed that the plant's dynamic system behaves linearly (in this point of operation). However, air separation and other industrial processes, typically, exhibit nonlinear dynamics. The assumption of linear dynamic behaviour restricts the reliable operating range of the generated LMPC. Hence, the controller's performance becomes the poorer the further the process is operated from the reference operation point (for which the linearity is approximately valid).

Compared to LMPC, applying NMPC and specifically including the natural nonlinearity of the process in the control model for industrial process control allows for an innovative automation solution beyond LMPC. This enables, for example, extended controller operation ranges. This also enables, for example, reliable and safe exploration of new operating regions when including physical and/or mathematical knowledge about the system in the control model (white box and grey box models). More specifically, this feature allows for the application of the model in operating regions outside the model's identification range. This also enables, for example, faster load changes for load flexible production. This enables, for example, further optimisation of operational efficiency.

Using or applying NMPC for operating or controlling the operation of a process plant, however, has some challenges. While LMPC is an established automation solution in industry, practical applications of NMPC are still rare due to i) challenges arising in control model development, ii) real time optimisation of the control model, iii) online state initialisation of complex nonlinear models, and iv) lack of available commercial frameworks.

A way to enable ii) real time optimisation of the control model is to use a model reduction method. Model reduction refers to a procedure where a detailed model is reduced in size and/or complexity so that the reduced model's properties (e.g., number of model variables, number and/or type of mathematical operations) allow for a smaller effort with regard to a purpose and/or use of the reduced model such as mathematical optimization. Such a method simplifies a detailed (often white box) model to obtain smaller models. The reduced models are often grey box models. Performing model reduction on a detailed physical model can increase the offset and can possibly result in a significant offset between the reduced model and the detailed model (or the real process plant). Large offsets can affect the NMPC performance and require compensation strategies.

A way to enable iii) online state initialisation of complex nonlinear models is to use a state estimator to compute the current model state. State estimation is a classic field from process automation with several methods available, for example Kalman filters and their nonlinear extensions, particularly extended Kalman filter and unscented Kalman filter, particle filter techniques, or moving horizon state estimators.

Performing state estimation introduces additional computational cost to the MPC feedback loop. The magnitude of this cost strongly depends on the estimation algorithm and performing state estimation can be challenging in practice, especially for complex nonlinear models or in instances where a plant-model offset is present.

The dynamic model used as a control model naturally exhibits an offset to the process plant. A small plant or model offset can be of advantage. There are several approaches for plant or model offset correction available in literature, for example, offset correction by means of disturbance models, or model correction by online training of data-driven model components, e.g., artificial neural networks (ANNs).

Using disturbance models compensates offset within the state estimation task. To this end, additional variables can be introduced to the control model to provide more degrees of freedom to the state estimation for a better fitting of the measurements by the model. Similarly, model correction by online training of data-driven correctors reduces the model output mismatch. However, either method is typically not able to correct the fundamental model error of a reduced or mechanistic model in a reliable fashion.

Within the present invention, operating the process plant is performed by means of a control system (or controller, i.e., a computing or processing unit). The control system comprises (or implements) a model predictive controller having a control model, i.e., model predictive control is used. A method of operating comprises the step of initialising the control model, based on a digital twin of the process plant. The method comprises the further step of determining, based on the initialised control model, one or more setpoints for one or more parameters of one or more process components and/or units of the process plant (or processes of these process components and/or units). The one or more parameters can comprise one or more of the following parameters: a valve position, a flow of medium, a pressure of medium, a temperature of medium, a component concentration of medium, and a pump, compressor, or turbine throughput. This step can comprise, for example, an optimization or optimization calculations as is typical for model predictive control, what can include, for example, predicting different values into the future and selecting the best ones. The method comprises the further step of providing the one or more setpoints to control the process plant, in particular, the actual control.

A typical model predictive control requires state estimation, i.e., one or more states of the process plant, or one or more parameters of the process plant, or the one or more processes to be controlled, need to be determined. While some parameters or their values can be measured by means of sensors, for example, a process plant like a plant comprising ASUs typically has many states or parameters that are not or even cannot be measured but are of particular relevance for controlling the operation of the process plant. Examples for such states that are not or cannot be measured are medium flows into or in or levels of medium within distillation columns or the like, or types of abstract states. Since such states are often included in the control model, their initial values are necessary for model predictive control using said control model. Due to lack of measured values, the values of these states need to be estimated, using, for example, Kalman filters or the like as mentioned above. This is also called initialisation of the control model.

Instead of estimating the states in such classical way, a digital twin of the process plant is used within the present invention. In other words, an aspect of the invention is to remove state estimation from the classical control loop and instead use a digital twin operating, preferably, in parallel to the actual (and real) processes of the process plant for instantaneous and reliable control model initialization. This is now done via the digital twin but not directly via classical state estimation.

The digital twin of the one or more processes can be run online and in parallel to the process plant to visualise and monitor the internal states of the one or more processes. In an embodiment, the digital twin is run on a processing system different from the control system (on which the MPC is run). The state of the digital twin can, in an embodiment, be updated on a repeated or regular basis; this is, in particular, independent of the actual process control loop using the model predive controller. At the same time, as part of the MPC control algorithm, the control model needs to be initialised with the current state(s) of the plant before starting the optimisation of controller setpoints. Information from the digital twin can be provided to and received by the control model which is part of the MPC.

In an embodiment of the invention, the model predictive controller is a nonlinear model predictive controller (NMPC). As mentioned above, using an NMPC allows better operation of the process plant. A NMPC enables, for example, extended controller operation ranges, reliable and safe exploration of new operating regions when including physical and/or mathematical knowledge about the system in the control model (white box and grey box models). More specifically, this feature allows the application of the model in operating regions outside the model's identification range. This also enables, for example, faster load changes for load flexible production, and further optimisation of operational efficiency. The prior drawbacks of using NMPC can now be overcome with the model initialisation using the digital twin.

In other words, the initialization of the control model has usually been realized using state estimation (e.g., Extended Kalman Filter, Moving Horizon Estimator) to determine the differential states of the control model, depending on the available measurements of the plant. Within the present invention, a (regularly updated) digital twin with known internal states is used for this initialisation of the control model instead of state estimation. This is possible since full-state (detailed) information from the digital twin can be directly translated into reduced state information for the control model, e.g., using the reduction specification or data-based approaches. Regarding real time capability of the NMPC, this can reduce calculation time as the state estimation step as part of the control loop is avoided. Since the digital twin can be a very accurate model, updating the digital twin less frequently than the controller sampling time is legitimate in many cases.

In an embodiment of the invention, the method further comprises adapting the control model. Preferably, adapting the control model is based on the digital twin. In other words, the digital twin can be used to provide the necessary (detailed) information for online correction of the (reduced) control model, i.e., adaptive model reduction. In other words, online improvement of the (nonlinear) control model is possible by online adaptation as part of the control framework. The adaptation step can be used to update not only the current model state but also one or all data driven component(s) (e.g., by training) of the (hybrid or grey box) control model. Thereby, model offset of the control model can be reduced adaptively with respect to one or multiple target model outputs. While such online adaption is particular useful for NMPC, it can also apply to LMPC.

It is noted that using the digital twin to adapt the control model can also be used independently from initialising the control model using the digital twin, i.e. the initialising could also be in classical way like using state estimation. Nevertheless, all other embodiments mentioned (which are not directly linked to the initialising) can also be applied here.

In general, a digital twin is a digital representation of an intended or actual real-world physical product, system, or process (a physical twin) that serves as the effectively indistinguishable digital counterpart of it for practical purposes, such as simulation, integration, testing, system monitor, and maintenance. A digital twin of an existing entity can, but must not necessarily, be used in real time and regularly synchronized with the corresponding physical system. Within the present invention, the digital twin is the digital representation of the real world (physical) process plant and/or processes performed by the process plant. As such, there does not need to be any interference or online connection between the digital twin and the process plant. However, within the present invention, the digital twin is used to initialise the control model of the MPC used for operating the (real world) process plant.

The digital twin can be based on (or be) a (detailed) dynamic model of the process plant. This dynamic model can be based on at least one of thermo fluidic correlations, thermo dynamic correlations, phenomenological (i.e., empiric) correlations, mechanical equations (of state and physical properties of the plant and material and components used therein). Further, the dynamic model can be based on geometry and/or topology of components of the process plant. In an embodiment, the dynamic model can be configured to represent a transition from one to another state of the process plant, in particular, of a separation column of the plant.

Such a (physical) model is also called a first principles model as it is based on physical properties like heat and mass balances and the like. This model can represent the geometry and topology of equipment or components in the same level of detail that is being used in process and/or equipment design. That is, heat exchangers, for example, are modelled in one space dimension whereas distillation columns are modelled as a sequence of theoretical trays. This approach enables the use of design correlations for pressure drops, heat transfer coefficients, fluid holdup and so on. However, unlike the equipment design tools, this dynamic model in particular balances holdups for gas and liquid and energy and, hence, allows for modelling transient states of the plant. This dynamic model in particular also covers the entire operating range of the plant. The entire operating range can comprise start-up, regular operation, shut-down, and also failure management. Such model can also be called a pressure-driven model (but does not necessarily have to be a pressure-driven model).

Such dynamic model used as or for the digital twin is different from the control model used in the MPC for operating the process plant. Typically, the dynamic model for the digital twin is more detailed and more complex than the control model. However, the control model for the MPC can, for example, be obtained from the dynamic model of the digital twin. This is also called model reduction.

As mentioned, practical application of NMPC is still rare in industry because it is very difficult to implement. The present invention, however, enables the practical implementation and application of NMPC. Implementing NMPC instead of LMPC, for example, allows for faster load changes, increased controller operating range and further optimised plant efficiency (e.g., less required MAC (main air compressor) power consumption based on air flow intake during load changes and steady state full load for ASUs without argon production) leading to lower overall energy consumption of the process plant.

Initialising the (nonlinear) control model by using an online digital twin allows to avoid the estimation of the differential states in the control model depending on the available measurements of the process plant. This saves calculation time and reduces the complexity of the controller. Initialising the (nonlinear) control model by using an online digital twin can further be more accurate than using conventional state estimation approaches (e.g. Extended Kalman Filter) improving the performance of the NMPC. The (nonlinear) control model can be a white-box model, a black-box model or a grey-box model.

Online adaptation of the (nonlinear) control model (towards the operating plant) in the context of the control framework can make the NMPC self-learning. This reduces the need for regular controller and control model maintenance.

An embodiment of the invention relates a control system, that is configured, preferably by means of a computer program (stored on the control system), to perform a method according to the invention. Such control system can be or comprise or be part of a processing system or processor, for example.

Further aspects of the invention are a computer program with program code means for causing a control system or processing system to perform a method according to the invention, and a computer readable data carrier having stored thereon such a computer program. This allows for particularly low costs, especially when a performing computing unit is still used for other tasks and therefore is present anyway. Suitable media for providing the computer program are particularly floppy disks, hard disks, flash memory, EEPROMs, CD-ROMs, and DVDs etc. A download of a program on computer networks (Internet, Intranet, Cloud applications, etc.) is also possible.

Further advantages and embodiments of the invention will become apparent from the description and the accompanying drawings.

It should be noted that the previously mentioned features and the features to be further described in the following are usable not only in the respectively indicated combination, but also in further combinations or taken alone, without departing from the scope of the present invention.

The invention will now be further described with reference to the accompanying drawings, which show a preferred embodiment.

### Brief description of the drawings

- Fig. 1: schematically shows a process plant according to an embodiment of the invention;
- Fig. 2: schematically shows a method according to an embodiment of the invention; and
- Fig. 3: schematically shows a method according to a further embodiment of the invention.

### Detailed description of the drawings

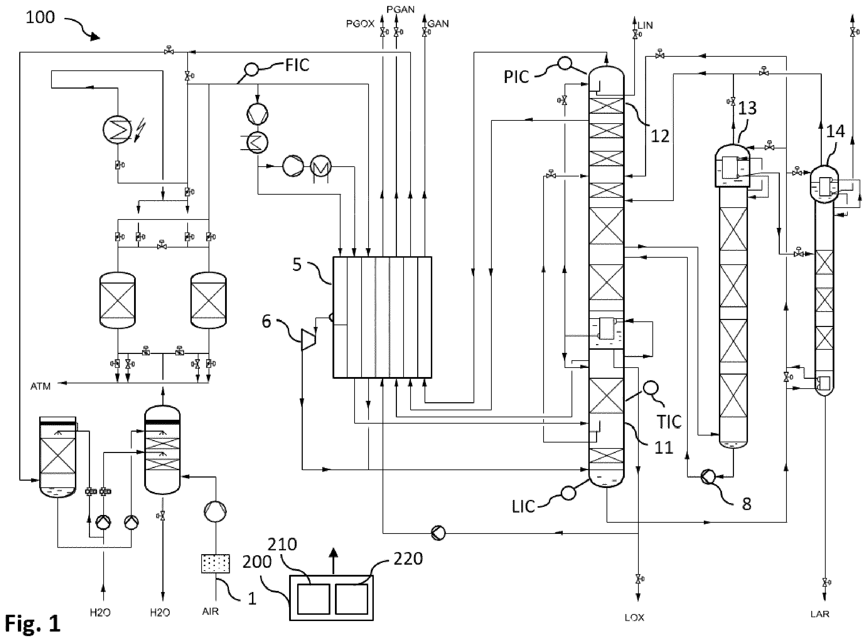

Fig. 1 schematically illustrates a process plant 100 according to an embodiment of the invention. By means of example, process plant 100 comprises or is an air separation unit (ASU) with nitrogen, oxygen, and argon products. The process plant 100 comprises, among other components, a main air supply 1, a main heat exchanger 5, an expansion turbine 6, further heat exchangers, a pump 8, a high pressure column 11 and a low pressure column 12. High pressure column 11 and low pressure column 12 are part of a typical distillation column system.

In the air separation unit, an input air stream, supplied via main air supply 1, is typically compressed, pre-cooled and cleaned. Further, the air stream can be separated into two streams, one of which is fully cooled in the main heat exchanger 5, the other one is only partly cooled in the main heat exchanger 5. The latter one can then be expanded by means of expansion turbine 6. The fully cooled air stream can be supplied to the high pressure column 12 via a heat exchanger, and the partly cooled air stream can be supplied to the low pressure column 11.

Further, a control system 200, implementing a model predictive controller 210 having a control model 220 is shown. In an embodiment, the process plant comprises the control system 200. Further, a processing system 300 running a digital twin 310 of the process plant 100 as such or of processes of the process plant 100 is shown. In an embodiment, the process plant comprises the processing system 300. Preferably, the processing system 300 is different from the control system 200 but can provide information to it.

The control system 200 is configured to operate the process plant 100, for example, in that one or more setpoints for one or more parameters of one or more processes (or process components/units) of the process plant 100 are determined and provided. By means of example, different parameters that can be controlled are shown by means of several controllers shown at specific positions within the process plant 100. Such controllers include flow controllers FIC, pressure controllers PIC, liquid level controllers LIC and temperature controllers TIC. The control system can be used to specify setpoints for one or more of these controllers or to replace one or more of these controllers LIC, PIC, FIC, TIC (or AIC, which is not shown in Fig. 1).

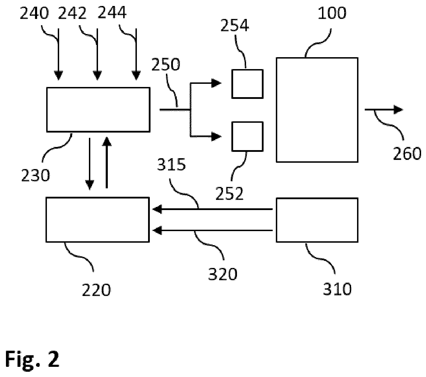

Fig. 2 schematically illustrates a method according to an embodiment of the invention. The method can be performed using the control system 200 shown in Fig. 1, for example, and the model predictive controller 210 with the control model 220 running on the control system 200. In Fig. 2, only the control model 220 is shown. Preferably, the model predictive controller is a nonlinear model predictive controller, i.e., the control model 220 is a nonlinear model. In addition, the digital twin 310 is shown. The digital twin 310 can be run on the processing system 300 shown in Fig. 1, for example.

Step 315 shows initialising the control model 220, based on the digital twin 310 of the process plant. This can comprise receiving values of one or more internal states of the digital twin 310, from the digital twin 310 (or the processing system on which the digital twin is run). As mentioned, many parameters of the process plant or its processes cannot be or are not measured but are to be used for operating the process plant. The digital twin, which is a digital version of the process plant, however, allows determining values also of such specific parameters and, thus, initialise the control model. No estimation based on, e.g., Kalman filters or the like have to be used to initialize the model from the digital twin. Such estimation would be based on measured values of other parameters of processes in the plant, for example.

In step or procedure 230, one or more setpoints for one or more parameters of one or more processes of the process plant are determined (typically within an optimisation). Step or procedure 230 can be performed by controller 210. By means of example, two setpoints 252, 254 are shown. As mentioned with respect to Fig. 1, different setpoints for different parameters can be determined. Determining these setpoints is based on the initialised control model 220 within, typically, an optimisation. In addition, further requirements or values can be considered in such optimisation, for example, process targets 240 (e.g., desired medium flows), process constraints 242 (e.g., product purity), and/or tuning parameters 244.

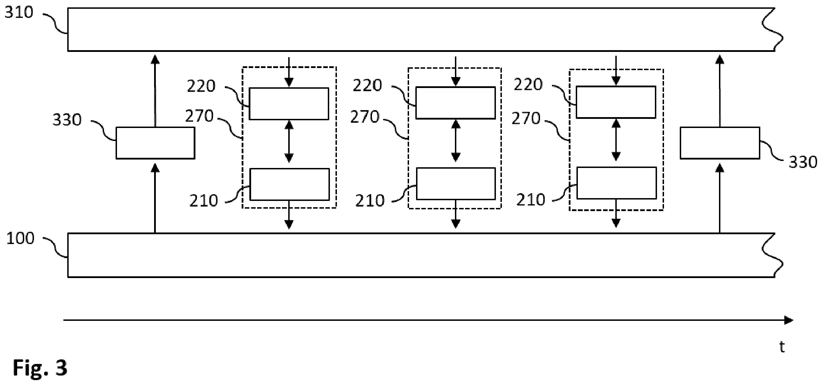

These setpoints are provided, in step 250, to operate the process plant 100, i.e., these setpoints are set in the real process plant 100 for, e.g., respective valves or medium flows or the like. Measurements 260 can then be made at the process plant 100. This can include measuring values of parameters for which the setpoints have been determined and/or other parameters. The measurements (or the measured values) can in addition be used within the step 230 of determining the setpoints (as well as in step 330 of updating the digital twin, see Fig. 3 below) or, rather, new setpoints in a later point in time.

In addition to using the digital twin 310 to initialise the control model 220, the digital twin 310 can also be used to adapt the control model 220, as illustrated with step 320.

Fig. 3 schematically illustrates a method according to a further embodiment of the invention. The method can be performed using the control system 200 shown in Fig. 1, for example, and the model predictive controller 210 with the control model 220 running on the control system 200. In Fig. 3, only the control model 220 and the model predictive controller 210 are shown. Preferably, the model predictive controller 210 is a nonlinear model predictive controller, i.e., the control model 220 is a nonlinear model. In addition, the process plant 100 and the digital twin 310 are shown. The digital twin 310 can be run on the processing system 300 shown in Fig. 1, for example.

While Fig. 2 illustrates the model predictive control within a typical control loop that is repeated over time, Fig. 3 illustrates the operation of the process plant 100 over time t. Two different types of steps are illustrated. A first type of step 330 is an update of the digital twin 310 that can be performed ,e.g., using the measurements 260 and/or, e.g., a state estimation method. Updating the digital twin 310 can be based on the real (physical) process plant 100. For example, specific parameters or processes have changed in the process plant; this can then be reflected in the digital twin 310 in order to keep the digital twin up to date.

A further type of step 270 is using the model predictive controller 210 and the control model 220 for operating the process plant, i.e., determining the setpoints (with information exchange between controller 210 and model 220, illustrated by means of a double headed arrow. Such step can be part of a control procedure. A control procedure can comprise a cycle from plant 100 via digital twin 310 via model 220 and control 210 and back to plant 100; it can correspond to the one described with respect to Fig. 2. The digital twin 310 is used in initialise the control model 220 and, by means of the model predictive controller 210, the process plant 100 is operated, i.e., setpoints are determined and set.

An advantage of the present invention as described above is that this complete control procedure does not always have to be run through completely. Instead, digital twin 310 is used (which is usually not part of a control procedure at all) to limit or reduce the procedure from the digital twin 310 to plant 100.

Such control procedure, or step 270 as a part of it, can be repeated regularly over time, for example, every 1 second, every 10 seconds or every 1 minute. The update of the digital twin, step 330, can also be repeated regularly over time. However, another time interval can be applied; for example, the update can be performed every 0.1 seconds, every 1 minute or every 10 minutes. An aspect here is that the two classic sequential tasks of state estimation and control optimization are decoupled by the digital twin.

## Claims

1. A method for operating a process plant, wherein the process plant is configured to perform at least one of substance modifications and substance conversions, with the aid of at least one of physical, chemical, biological, and nuclear effects, preferably, separation of air into nitrogen and/or oxygen and/or argon and/or other components included in air,
said method comprising the following steps, performed by a control system comprising a model predictive controller having a control model:
initialising the control model, based on a digital twin of the process plant,
determining, based on the initialised control model, one or more setpoints for one or more parameters of one or more process components and/or units of the process plant; and
providing the one or more setpoints to control the process plant.

2. The method of claim 1, wherein initialising the control model, based on the digital twin of the process plant, comprises initialising the control model based on one or more internal states of the digital twin.

3. The method of claim 2, further comprising: receiving values of the one or more internal states of the digital twin, from the digital twin, for initialising the control model.

4. The method of any one of the preceding claims, wherein the digital twin is run in parallel to operating the process plant.

5. The method of any one of the preceding claims, wherein the digital twin is run on a processing system different from the control system.

6. The method of any one of the preceding claims, wherein the digital twin is, repeatedly or regularly, updated.

7. The method of any one of the preceding claims, where the model predictive controller is a nonlinear model predictive controller.

8. The method of any one of the preceding claims, further comprising: adapting the control model.

9. The method of claim 8, wherein adapting the control model is based on the digital twin.

10. The method of any one of the preceding claims, wherein the one or more parameters comprise one or more of the following parameters: a valve position, a flow of medium, a pressure of medium, a temperature of medium, a component concentration of medium, and a pump, compressor, or turbine throughput.

11. A method for operating a process plant, wherein the process plant is configured to perform at least one of substance modifications and substance conversions, with the aid of at least one of physical, chemical, biological, and nuclear effects, preferably, separation of air into nitrogen and/or oxygen and/or argon and/or other components included in air,
said method comprising the following steps, performed by a control system implementing a model predictive controller having a control model:
initialising the control model;
determining, based on the initialised control model, one or more setpoints for one or more parameters of one or more process components and/or units of the process plant; and
providing the one or more setpoints to control the process plant,
said method further comprising: adapting the control model based on a digital twin of the process plant.

12. The method of any one of the preceding claims, wherein the process plant comprises or is at least one of an air separation unit, a natural gas plant, an ethylene plant, a hydrogen plant and an adsorption plant.

13. A control system, configured, preferably by means of a computer program, to perform the method of any one of the preceding claims.

14. A process plant configured to perform at least one of substance modifications and substance conversions, with the aid of at least one of physical, chemical, biological, and nuclear effects, wherein the process plant comprises the control system of claim 13.
